# EUROPÄISCHE PATENTSCHRIFT

(11) **EP 3 430 092 B1**
(45) Veröffentlichungstag und Bekanntmachung des Hinweises auf die Patenterteilung: **27.05.2020**
(21) Anmeldenummer: 17736652.3
(22) Anmeldetag: 05.07.2017
(51) Int. Cl.: C09D 4/00, C08J 7/04, C09D 133/10, C09D 133/12, C09D 183/04, C09D 183/06

(54) **BESCHICHTUNGSSYSTEM**
COATING SYSTEM
SYSTÈME DE REVÊTEMENT

(30) Priorität: 05.07.2016 DE 102016112319
(43) Veröffentlichungstag der Anmeldung: 23.01.2019
(73) Patentinhaber: KRD Coatings GmbH, 21502 Geesthacht (DE)
(72) Erfinder: BRAMMER, Beate-Korinna, 21357 Bardowick (DE); NEEB, Rolf, 64367 Mühltal Nieder-Ramstadt (DE); HINRICHSEN, Denni, 21423 Drage OT Stove (DE); DIETZ, Christian, 21385 Amelinghausen (DE)
(74) Vertreter: Noack, Andreas
(86) Internationale Anmeldenummer: PCT/EP2017/066754
(87) Internationale Veröffentlichungsnummer: WO 2018/007436

(56) Entgegenhaltungen:
- US-A- 4 396 678
- US-A- 4 477 519
- US-A- 4 559 271
- US-A- 5 409 778
- US-A1- 2014 272 434

## Beschreibung

Die Erfindung betrifft ein Beschichtungssystem der im Oberbegriff des Anspruchs 1 genannten Art, sowie damit hergestellte Schichtenverbunde und Verfahren zu deren Herstellung. Insbesondere betrifft die vorliegende Erfindung ein Beschichtungssystem zur Herstellung von hochkratzfesten Beschichtungen auf Formkörpern, welche die ECE 43 R erfüllen.

In jüngerer Zeit hat sich für thermoplastische Kunststoffe aufgrund Ihrer vorteilhaften Eigenschaften eine Vielzahl von Einsatzmöglichkeiten ergeben. Kunststoffe haben insbesondere gegenüber Glas den Vorteil, dass sie zu einer deutlichen Gewichtsersparnis beitragen können. In einigen Fällen sind auch die mechanischen Eigenschaften gegenüber Glas deutlich besser. Thermoplastische Kunststoffe erreichen jedoch nicht die Kratzfestigkeit vieler Metalle oder Mineralgläser. Besonders nachteilig macht sich diese Anfälligkeit gegenüber Kratzern bei transparenten Kunststoffen bemerkbar, da die betreffenden Gegenstände sehr schnell unansehnlich und weniger transparent werden.

Aus diesem Grund wurde versucht, Kunststoffoberflächen durch das Aufbringen von sogenannten Kratzfestbeschichtungen für Kunststoffe kratzfester auszubilden. So beschreiben EP 0 073 911 A1, DE 3 439 482 und DE 2 113 734 C2 kratzfeste Überzüge für Kunststoffe, die eine gute Kratzfestigkeit bei relativ hoher UV-Stabilität aufweisen. US 2014/272434 A1 beschreibt Beschichtungszusammensetzungen, die cyclische Carbonat-Amin-Harze umfassen.

Kratzfest beschichtete Kunststoff-Formkörper werden z. B. bei Lärmschutzwänden, als Verglasungen von Bushaltestellen, von Werbeflächen, Litfaß-Säulen oder in zunehmendem Maße in der Automobilindustrie eingesetzt. Neben dem Verschleiß durch natürliche, gebrauchsbedingte Verkratzungen treten auch zusätzliche Verkratzungen durch Vandalismus auf. Die Aufarbeitung solcher Oberflächen ist sehr aufwendig und oft so teuer, dass statt einer Reparatur meist ein Ersatz der Kunststoff-Formkörper vorgenommen werden muss.

Eine der Erfindung zu Grunde liegende Aufgabe liegt somit darin, entsprechend verbesserte Beschichtungsmittel bereitzustellen, die gegenüber den bekannten Systemen eine höhere Kratzfestigkeit aufweisen.

Aufgrund ihrer mangelnden Kratzfestigkeit in der bisher durchgeführten Abrieb- und Kratzfestigkeitsprüfung nach ECE 43 R (Stand 03.11.2013) waren Kunststoffscheiben im Frontbereich eines Fahrzeugs im Automobilbereich bislang nicht in der Lage, die gesetzlichen Anforderungen zu erfüllen, und konnten nur in Ausnahmefällen zugelassen werden. Dies hat sich in jüngerer Zeit durch die überarbeitete internationale Regelung ECE 43 (Stand 08.10.2015) geändert, in der nun alternativ die Möglichkeit besteht, die Abrieb- und Kratzfestigkeit durch einen Satz von drei anderen Tests zu bestätigen, so dass Kunststoffscheiben mit einer entsprechend hohen Abrieb- und Kratzfestigkeit künftig die Möglichkeit erhalten, für Scheiben im Frontbereich von Fahrzeugen zugelassen zu werden.

Ein weiteres Ziel der vorliegenden Erfindung bestand somit darin, kratzfest beschichtete Kunststoffscheiben bereitzustellen, welche die geforderte ECE 43 R, sowie weitere Tests wie den Taber-Test 500, den Kochtest (Haftung) nach DIN 2409, eine Wasserlagerung bei 65°C in Anlehnung an ISO 62 und einen Bewitterungstest in Anlehnung nach ASTM 6155, ISO 4892-2 und DIN 53387 je nach möglichen Kundenwüschen erfüllen, und darüber hinaus bei angemessener Schichtdicke eine ausreichende Chemikalienbeständigkeit und zufriedenstellende Farbton- und Spannungsmessungen aufweisen.

Schließlich lag der Erfindung auch die Aufgabe zugrunde, kratzfeste Kunststoff-Formkörper zur Verfügung zu stellen, die besonders einfach hergestellt werden können. So sollten zur Herstellung der Formkörper insbesondere Substrate verwendet werden, die durch Extrusion, Spritzguss sowie Gussverfahren erhältlich sind. Darüber hinaus sollten die Formkörper besonders gute optische Eigenschaften aufweisen.

### Beschreibung der Erfindung

Gelöst werden diese Aufgaben sowie weitere, die zwar nicht wörtlich genannt werden, sich aber aus den hierin diskutierten Zusammenhängen ableiten lassen oder sich aus diesen ergeben, durch das in Anspruch 1 beschriebene Beschichtungssystem, sowie einen Schichtenverbund, eine Verwendung des Schichtenverbundes und Verfahren zu dessen Herstellung gemäß weiterer unabhängiger Ansprüche. Zweckmäßige Abwandlungen werden in den Unteransprüchen unter Schutz gestellt.

In einem ersten Aspekt betrifft die Erfindung somit ein Beschichtungssystem zur Herstellung eines hochkratzfesten Schichtenverbundes umfassend eine Primerzusammensetzung und eine Oberflächenzusammensetzung, dadurch gekennzeichnet, dass die Primerzusammensetzung a1) Polyalkylmethacrylat, a2) Polysiloxan, und a3) organisches Lösungsmittel umfasst, und dass die Oberflächenzusammensetzung b1) kolloidales Siliciumdioxid, b2) Methyltrimethoxysilan und/oder Methyltriethoxysilan, b3) Methyltriacetoxysilan, und b4) organisches Lösungsmittel umfasst, vorzugsweise n-Butanol und/oder Isopropanol. Das organische Lösungsmittel ist vorzugsweise 1-Methoxy-2-propanol.

Die Primer- und die Oberflächenzusammensetzungen liegen als getrennte Zusammensetzungen vor, die, wie hierin beschrieben, nicht gemischt werden, sondern nacheinander auf eine Kunststoffschicht aufgetragen werden. Das erfindungsgemäße Beschichtungssystem ist somit vorzugsweise ein Beschichtungssystem für (d. h. zum Auftragen auf) eine Kunststoffscheibe oder einen anderen Kunststoffkörper. Dabei wird die Oberflächenzusammensetzung erst aufgetragen, wenn die zuvor aufgebrachte Primerzusammensetzung getrocknet ist.

Die Kombination aus der erfindungsgemäßen Primerzusammensetzung mit einer Oberflächenzusammensetzung erlaubt überraschenderweise die Herstellung von hochkratzfesten Schichtverbunden, die das geforderte Niveau der ECE 43 Regelung erreichen und darüber hinaus weitere sehr gute Eigenschaften aufweisen. Die Begriffe ECE 43 R und ECE R43 werden hierin synonym verwendet.

Mit dem erfindungsgemäßen Beschichtungssystem hergestellte Schichtverbunde weisen unter anderen insbesondere die folgenden Vorteile auf:
- Die mit dem erfindungsgemäßen Beschichtungssystem hergestellten Beschichtungen weisen eine besonders hohe Haftung auf den Substraten auf, wobei die Eigenschaften auch durch Bewitterung nicht beeinträchtigt werden.
- Die Schichtenverbunde zeigen eine hohe Beständigkeit gegen UV- Bestrahlung.
- Die erfindungsgemäßen Beschichtungssysteme sowie hieraus erhältliche Schichtenverbunde können kostengünstig hergestellt werden.
- Die erfindungsgemäß beschichteten Kunststoffkörper weisen eine geringe Oberflächenenergie auf, wodurch deren Reinigung vereinfacht wird.
- Die kratzfesten Schichtenverbunde der vorliegenden Erfindung können leicht an verschiedene Erfordernisse angepasst werden. Insbesondere kann die Größe und Form der Schichtenverbunde in weiten Bereichen variiert werden.
- Die erfindungsgemäßen Schichtenverbunde weisen hervorragende optische Eigenschaften auf.
- Die Kratz- und Abriebfestigkeit der erfindungsgemäßen Schichtenverbunde entspricht den Anforderungen der ECE R43. Die an sich sehr rissanfällige Oberflächenschicht wird durch die Grundierung mit der Primerschicht so stabil, dass sie sogar bei Lauflängen von mehr als 1400 mm als Beschichtung eingesetzt werden kann.
- Die Primerschicht ermöglicht durch ihre Zusammensetzung den Verzicht auf einen zusätzlichen UV-Schutz in der Oberflächenschicht. Hierdurch wird die Kratzfestigkeit der Oberflächenschicht maximiert.

Das erfindungsgemäße Beschichtungssystem ist ein Kit aus mindestens einer Primerzusammensetzung und einer Oberflächenzusammensetzung. Das Beschichtungssystem ist für die Herstellung eines hochkratzfesten Schichtenverbundes geeignet, insbesondere für die Herstellung hochkratzfester Kunststoff-Verbundscheiben. Solche Scheiben können zum Beispiel im Fahrzeugbereich eingesetzt werden, z. B. als Frontscheiben oder Scheiben im vorderen Seitenbereich. Da die Primerschicht und die Oberflächenschicht nacheinander aufgebracht werden sollen, liegen Primerzusammensetzung und Oberflächenzusammensetzung als getrennte Lösungen vor.

"Hochkratzfest" im Sinne der Erfindung ist vorzugsweise gleichbedeutend mit einer Erfüllung der ECE R43. Diese Regelung verlangt zum Beispiel, dass die Schichtenverbunde im Wischertest nach ECE R43 ein Testergebnis von ≤ 2 % Haze erzielen und den Bewitterungstest nach ECE R43 bestehen.

Schichtenverbunde im Sinne der Erfindung sind vorzugsweise Kunststoff-Verbunde, d. h. Verbunde, die mindestens eine Kunststoffschicht umfassen. Die erfindungsgemäßen Schichtenverbunde umfassen daher - in dieser Reihenfolge - mindestens eine Kunststoffschicht, eine Primerschicht und eine Oberflächenschicht. Die Primerschicht liegt somit zwischen der Kunststoffschicht und der Oberflächenschicht. Die Oberflächenschicht sollte hierbei in der Regel im Schichtenverbund außenliegend sein. Selbstverständlich ist es nicht ausgeschlossen, dass auf der Oberflächenschicht weitere nützliche Beschichtungen, wie z. B. eine anti-Haftschicht, aufgetragen werden.

Der Schichtenverbund kann jegliche Form aufweisen. Bevorzugt ist der Schichtenverbund eine Scheibe, d. h. ein scheibenförmiger Schichtenverbund. Die Scheibe kann dabei eben sein oder eine Wölbung aufweisen (wie z. B. die Frontscheibe eines Kraftfahrzeugs). "Eben" bedeutet in diesem Zusammenhang, dass die Scheibe plattenförmig ohne Wölbungen in einer Ebene verläuft. Alternativ kann der Schichtenverbund aber auch ein Formkörper sein, der keine Scheibenform aufweist.

Die erfindungsgemäße Primerzusammensetzung umfasst a1) Polyalkylmethacrylat, a2) Polysiloxan, und a3) organisches Lösungsmittel.

Polyalkylmethacrylate sind dem Fachmann bekannt und im Handel erhältlich. Die Primerzusammensetzung kann ein oder mehrere Polyalkylmethacrylate umfassen, d. h. z. B. eine Mischung aus zwei oder mehr Polyalkylmethacrylaten. Die Polyalkylmethacrylate sind Polymere/Oligomere und Copolymere/-oligomere, die polymerisierte Alkymethacrylatmonomere umfassen.

Die Polyalkylmethacrylate weisen bevorzugt Alkylkettenlängen von 10 Kohlenstoffatomen oder weniger auf, d. h. Alkylkettenlängen mit 1 bis 10 Kohlenstoffatomen. Polyalkylmethacrylate mit einer Alkylkettenlänge von 1 bis 4 Kohlenstoffatomen sind besonders bevorzugt. Das Polyalkylmethacrylat kann eine lineare oder verzweigte Alkylkette aufweisen, wobei Polyalkylmethacrylate mit linearer Alkylkette bevorzugt sind.

Das Polyalkylmethacrylat kann z. B. ausgewählt sein aus der Gruppe bestehend aus Polymeren von Methylmethacrylat, Ethylmethacrylat, Propylmethacrylat, und Butylmethacrylat. Bevorzugt sind die in der Primerzusammensetzung enthaltenen Polyalkylmethacrylate zu 50% oder mehr Polymethylmethacrylat, stärker bevorzugt zu 70 % oder mehr, am stärksten bevorzugt zu 90% oder mehr. Polymethylmethacrylat ist somit als eine der Hauptkomponenten der erfindungsgemäßen Primerzusammensetzung bevorzugt.

Neben Polymethylmethacrylat umfasst die Primerzusammensetzung vorzugsweise mindestens ein weiteres Polyalkylmethacrylat mit einer Alkylkettenlänge von 10 Kohlenstoffatomen oder weniger, vorzugsweise von 2 bis 4 Kohlenstoffatomen. So kann die Primerzusammensetzung Polymethylmethacrylat und z. B. Polybutylmethacrylat und deren Copolymere umfassen. Das Verhältnis zwischen Polymethylmethacrylat und dem mindestens einem weiteren Polyalkylmethacrylat liegt zum Beispiel zwischen 3:1 und 11:1.

Für die Primerzusammensetzung geeignete Polyalkylmethacrylate sind z. B. im SHP 401 (SilFORT SHP401, Momentive) oder Degalan M920 (Evonik AG) enthalten.

Vorzugsweise enthält die Primerzusammensetzung 50 bis 95 Gewichtsteile einer 0,5 bis 30 Gew.-%igen Polyalkylmethacrylat -Lösung, stärker bevorzugt 60 bis 90 Gewichtsteile einer solchen Lösung. Die Polyalkylmethacrylat-Lösung kann zum Beispiel das Lösungsmittel 1-Methoxy-2-propanol und/oder Diacetonalkohol enthalten. Weitere geeignete Lösungsmittel sind dem Fachmann bekannt. Anders gesagt kann die Primerzusammensetzung zwischen 0,5 Gewichtsteilen und 28,5 Gewichtsteilen Polyalkylmethacrylat enthalten, z. B. zwischen 2 und 25, bevorzugt zwischen 4 und 10 Gewichtsteilen, z. B. etwa 5 Gewichtsteile.

Bezogen auf den Festkörperanteil bedeutet dies, dass der Festkörperanteil der Primerzusammensetzung zu etwa 30 bis 70 Gew.-% aus Polyalkylmethacrylat besteht. Vorzugsweise besteht der Festkörperanteil der Primerzusammensetzung zu etwa 40 bis 60 Gew.-%, so wie z. B. zu mindestens 45% Gew.-%, aus Polyalkylmethacrylat.

Der "Festkörper" ist derjenige Teil des Beschichtungssystems, der Primerzusammensetzung oder der Oberflächenzusammensetzung, der nach Entfernen aller flüchtigen Anteile durch z. B. Verdunsten der Lösungsmittel zurückbleibt. Der "Festkörperanteil" gibt an, wie viele nicht flüchtige Bestandteile in dem Beschichtungssystem, der Primerzusammensetzung oder der Oberflächenzusammensetzung enthalten sind. Je kleiner der Festkörperanteil, desto geringer fällt die Trockenschichtdicke aus.

Die Primerzusammensetzung umfasst neben dem Polyalkylmethacrylat auch ein oder mehrere Polysiloxane. Polysiloxane sind siliciumorganische Verbindungen, die -Si(R)ₙO₄-ₙ-Bindungen umfassen, wobei R in der Regel Wasserstoff oder ein Alkyl ist. Polymere aus Organosiloxanen, d. h. aus Siloxanen in denen R eine Alkylgruppe ist, sind bevorzugt. Insbesondere sind Polysiloxane bevorzugt, die Polymere von Trialkoxysilanen sind. Geeignete Trialkoxysilane sind z. B. Trimethoxysilan, Trimethoxymethylsilan und dergleichen.

Die Primerzusammensetzung enthält vorzugsweise 1 bis 70 Gewichtsteile Polysiloxan, stärker bevorzugt 2 bis 25 Gewichtsteile, am stärksten bevorzugt zwischen 4 und 10 Gewichtsteile Polysiloxan.

Bezogen auf den Festkörperanteil bedeutet dies, dass der Festkörperanteil der Primerzusammensetzung zu etwa 30 bis 70 Gew.-% aus Polysiloxan besteht. Vorzugsweise besteht der Festkörperanteil der Primerzusammensetzung zu etwa 40 bis 60 Gew.-%, beispielsweise zu etwa mindestens 45 Gew.-%, aus Polysiloxan.

Es ist erfindungsgemäß bevorzugt, dass der Festkörperanteil der Primerzusammensetzung zu 65 bis 95 Gew.-% aus einer Mischung aus Polysiloxan und Polyalkylmethacrylat besteht, vorzugsweise zu 70 bis 90 Gew.-%, stärker bevorzugt zu 75 bis 85 Gew.-%. Dabei kann das Verhältnis zwischen Polysiloxanen und Polyalkylmethacrylaten in der Primerzusammensetzung z. B. bei etwa 1:1 oder zwischen 2:1 und 1:2 liegen.

Die Herstellung der Primerzusammensetzung kann die Mischung einer ersten Lösung, die Polyalkylmethacrylat enthält, mit einer zweiten Lösung, die Polysiloxan enthält, umfassen. Vorzugsweise liegen sowohl das oder die Polyalkylmethacrylate in der ersten Lösung, als auch das oder die Polysiloxane in der zweiten Lösung bei der Mischung in einem organischen Lösungsmittel gelöst vor. Geeignete organische Lösungsmittel sind an anderer Stelle hierin beschrieben. Anders gesagt wird die Primerzusammensetzung vorzugsweise durch Mischung einer mit organischem Lösungsmittel verdünnten Polyalkylmethacrylatlösung mit einer mit organischen Lösungsmittel verdünnten Polysiloxanlösung hergestellt. Die Primerzusammensetzung ist z. B. herstellbar, indem eine Polyalkylmethacrylatlösung vorgelegt wird und die Polysiloxanlösung unter Rühren hinzugegeben wird.

Neben Polyalkylmethacrylat und Polysiloxan kann die erfindungsgemäße Primerzusammensetzung ein organisches Lösungsmittel umfassen. Das organische Lösungsmittel hält die Festkörperanteile der Primerzusammensetzung in Lösung und verdunstet nach dem Auftragen oder Fluten der Primerzusammensetzung auf die Kunststoffschicht. Mit dem organischen Lösungsmittel wird die Primerzusammensetzung somit auf den gewünschten Festkörperanteil eingestellt. Geeignete organische Lösungsmittel sind z. B. ausgewählt aus der Gruppe bestehend aus Alkoholen, wie z. B. 1-Methoxy-2-propanol, Diacethylalkohol, Ethanol, Isopropanol, n-Propanol, Isobutylalkohol, Butylalkohol, n-Butanol, Methoxyethanol; Ketone, wie z. B. Aceton, Methylethylketon; Isopropylglycol oder weitere, z. B. in EP 0 035 272 beschriebene, gebräuchliche organische Lösungsmittel für Beschichtungsmittel und für Kratzfestlacke. Besonders bevorzugte organische Lösungsmittel sind 1-Methoxy-2-propanol, Isopropylglycol und Diacethylalkohol.

Die Primerzusammensetzung kann ein oder mehrere organische Lösungsmittel enthalten. In einer Ausführungsform enthält die Primerzusammensetzung 1-Methoxy-2-propanol und Diacethylalkohol. In einer weiteren Ausführungsform enthält die Primerzusammensetzung 1-Methoxy-2-propanol, Ethanol, n-Butanol, Isopropylglycol und Diacethylalkohol. Es kann z. B. zu einer Mischung unterschiedlicher organischer Lösungsmittel in der Primerzusammensetzung kommen, wenn z. B. Polyalkylmethacrylat und Polysiloxan vor der Herstellung der Primerzusammensetzung in unterschiedlichen Lösungsmitteln gelöst vorlagen. Auch Wasser kann die Primerzusammensetzung als weiteres Lösungsmittel enthalten.

Die Primerzusammensetzung kann beispielsweise 0-90 Gewichtsteile, vorzugsweise 0-80 Gewichtsteile organisches Lösungsmittel, z. B. Diacethylalkohol, enthalten.

Der Festkörperanteil der Primerzusammensetzung bestimmt in Abhängigkeit von dem Herstellungsverfahren, welches für die Herstellung des Schichtenverbundes verwendet wird, die Schichtdicke der Primerschicht. Gleiches gilt für die Oberflächenzusammensetzung bzw. die Oberflächenschicht. Wie hierin an anderer Stelle gezeigt, beeinflusst die Schichtdicke der Primerschicht z. B. die Leistung der Schichtenverbunde in den der ECE 43 R zugrunde liegenden Tests. Vorteilhafte Schichtdicken sind an anderer Stelle hierin beschrieben. Es wurde festgestellt, dass diese Schichtdicken bei einer Aufbringung der Primerschicht durch das Flutverfahren bei einem Festkörperanteil der Primerzusammensetzung von 5,5 % bis 15 % erreicht werden. Entsprechend weist die Primerzusammensetzung vorzugsweise einen Festkörperanteil von 5,5 % bis 15%, stärker bevorzugt von 8 % und 13 %, wie z. B. von etwa 10 %, auf. Der Fachmann ist in der Lage, je nach verwendetem Herstellungsverfahren für die Schichtenverbunde, diesen Festkörperanteil so anzupassen, dass eine geeignete Schichtdicke erzielt wird.

Entsprechend weist die Primerzusammensetzung erfindungsgemäß einen Festkörperanteil auf, der geeignet ist, eine Primerschichtdicke von 2,0 µm bis 12,0 µm, vorzugsweise von 3,0 µm bis 10,0 µm, wie z. B. etwa 6,5 µm zu erzeugen.

In einer bevorzugten Ausführungsform besteht der Festkörperanteil der Primerzusammensetzung a1) zu etwa 30 bis 70 Gew.-% aus Polyalkylmethacrylat (wie z. B. in SHP 401 von Momentive oder KASI Primer von KRD Coatings GmbH enthalten); und a2) zu etwa 30 bis 70 Gew.-% aus Polysiloxan (wie z. B. in KASI PC Flex von KRD Coatings GmbH enthalten); und darüber hinaus enthält die Primerzusammensetzung a3) ein oder mehrere organische Lösungsmittel, wie z. B. 1-Methoxy-2-propanol (MOP). In einer noch stärker bevorzugten Ausführungsform besteht der Festkörperanteil der Primerzusammensetzung a1) zu etwa 40 bis 60 Gew.-% aus Polyalkylmethacrylat; und a2) zu etwa 40 bis 60 Gew.-% aus Polysiloxan; und darüber hinaus enthält die Primerzusammensetzung a3) ein oder mehrere organische Lösungsmittel, wie z. B. 1-Methoxy-2-propanol (MOP).

Neben den oben genannten Bestandteilen kann die Primerzusammensetzung weitere Additive enthalten, die z. B. das Produkt einfärben, die eine zusätzliche Erhöhung des UV-Schutzes bewirken oder zu einer Haftungsverbesserung führen. Dem Fachmann sind solche geeigneten Additive bekannt.

Es ist besonders bevorzugt, dass die Primerzusammensetzung einen oder mehrere UV-Absorber umfasst. UV-Absorber sind chemische Verbindungen, die als Schutz gegen Alterung durch UV-Strahlung wirken, indem sie UV-Strahlung absorbieren. Dem Fachmann sind geeignete UV Absorber bekannt. Geeignete UV-Absorber umfassen z. B. Hydroxybenzotriazole, Triazine, Hydroxybenzophenone (siehe z. B. WO 2011/032915 A1), Dibenzoylresorcinole, Titandioxide, Zinkoxide, Cerdioxide, 2-Hydroxy-benzophenone, 2,4-Dihydroxybenzophenone, 2-(2-Hydroxyphenyl)benzotriazole, 2-(2-Hydroxyphenyl)-1,3,4-triazine, 2-Cyanacrylate und Oxalnilide. Besonders bevorzugte UV Absorber sind Hydroxybenzotriazole, 2,4-Dihydroxybenzophenone, Dibenzoylresorcinole, und Hydroxybenzophenone. Bevorzugt ist der UV Absorber 2,4-Dihydroxybenzophenon.

Geeignete UV-Absorber sind z. B. in SilFort SHP401 enthalten oder können der Primerzusammensetzung aus a1) Polyalkylmethacrylat, a2) Polysiloxan und a3) organischem Lösungsmittel während der Herstellung gesondert beigemischt werden.

Die Primerzusammensetzung kann z. B. 1 bis 30 Gew.-% UV Absorber bezogen auf den Festkörperanteil der Primerzusammensetzung enthalten, vorzugsweise 1 bis 20 Gew.-%, besonders bevorzugt 10 bis 20 Gew.-%.

Neben der Primerzusammensetzung umfasst das Beschichtungssystem eine Oberflächenzusammensetzung (auch als Top Coat bezeichnet). Die Oberflächenzusammensetzung dient der Herstellung einer Oberflächenschicht, die auf die Primerschicht aufgetragen ist.

Die erfindungsgemäße Oberflächenzusammensetzung umfasst vorzugsweise b1) kolloidales Siliciumdioxid, b2) Methyltrimethoxysilan (MTMS) und/oder Methyltriethoxysilan (MTES), b3) Methyltriacetoxysilan (MTAS), und b4) organisches Lösungsmittel. Das oder die organischen Lösungsmittel sind bevorzugt n-Butanol und/oder Isopropanol.

Kolloidales Siliciumdioxid (auch: kolloidales Siliciumdioxyd) verbessert die Kratzfestigkeit und Abriebfestigkeit von Oberflächen. Darüber hinaus weist es, insbesondere innerhalb einer Matrix, eine gute Haftung auf verschiedenen Substraten auf. Vorzugsweise umfasst die Herstellung der Oberflächenzusammensetzung die Vermischung einer Dispersion, die kolloidale Siliciumdioxide enthält, mit weiteren Komponenten der Oberflächenzusammensetzung. Es hat sich herausgestellt, dass sowohl saure als auch basische kolloidale Siliciumdioxide für die erfindungsgemäße Oberflächenzusammensetzung geeignet sind. Bevorzugt ist das kolloidale Siliciumdioxid ein basisches kolloidales Siliciumdioxid. Dispersionen, die kolloidale Siliciumdioxide enthalten, sind von verschiedenen Herstellern erhältlich. Geeignete kolloidale Siliciumdioxide sind z. B. das basische Ludox LS (z. B. von Hersteller: Grace) oder das saure Levasil 200E/20 (z. B. von Hersteller: Akzonobel). Die kolloidalen Siliciumdioxide weisen eine gute Verträglichkeit gegenüber organischen Lösungsmitteln innerhalb der Reaktionszeit während der Herstellung auf, so dass es im Wesentlichen zu keiner Ausfällungsreaktion kommt.

Die Oberflächenzusammensetzung kann z. B. 1 bis 80 Gewichtsteile, vorzugsweise 40 bis 70 Gewichtsteile kolloidales Siliciumdioxid (wie z. B. Ludox LS oder Levasil 200E/20) umfassen. In einer bevorzugten Ausführungsform umfasst die Oberflächenzusammensetzung 45 bis 65 Gewichtsteile kolloidales Siliciumdioxid.

Bezogen auf den Festkörperanteil bedeutet dies, dass der Festkörperanteil der Oberflächenzusammensetzung zu etwa 20 bis 70 Gew.-% aus kolloidalem Siliciumdioxid besteht. Vorzugsweise besteht der Festkörperanteil der Oberflächenzusammensetzung zu etwa 25 bis 50 Gew.-%, so wie z. B. zu etwa 30 Gew.-%, aus kolloidalem Siliciumdioxid.

Daneben umfasst die Oberflächenzusammensetzung Methyltrimethoxysilan (MTMS) und/oder Methyltriethoxysilan (MTES).

Die Oberflächenzusammensetzung umfasst 1 bis 80 Gewichtsteile Methyltrimethoxysilan (MTMS) und/oder Methyltriethoxysilan (MTES), bevorzugt 40 bis 70 Gewichtsteile. "70 Gewichtsteile MTMS und/oder MTES" bedeutet, dass die Gewichtsteile des MTMS und die Gewichtsteile des MTES gemeinsam eine Menge von 70 Gewichtsteilen ergeben. Vorzugsweise umfasst die Oberflächenzusammensetzung 1 bis 80, bevorzugt 40 bis 70 Gewichtsteile MTMS.

Bezogen auf den Festkörperanteil bedeutet dies, dass der Festkörperanteil der Oberflächenzusammensetzung zu etwa 30 bis 80 Gew.-% aus MTMS und/oder MTES besteht. Vorzugsweise besteht der Festkörperanteil der Oberflächenzusammensetzung zu etwa 40 bis 75 Gew.-%, so wie z. B. zu etwa 70 Gew.-%, aus MTMS und/oder MTES.

Weiter vorzugsweise besteht der Festkörperanteil der Oberflächenzusammensetzung zu etwa 30 bis 80 Gew.-% aus MTMS. Der Festkörperanteil der Oberflächenzusammensetzung kann insbesondere zu etwa 40 bis 75 Gew.-%, so wie z. B. zu etwa 70 Gew.-%, aus MTMS bestehen.

Das Verhältnis zwischen dem kolloidalem Siliciumdioxid und dem MTMS und/oder MTES in der Oberflächenzusammensetzung kann bei etwa 1:4 oder zwischen 1:5 und 5:1, vorzugsweise zwischen 4:1 und 1:4 liegen.

Daneben kann die Oberflächenzusammensetzung Methyltriacetoxysilan (MTAS) enthalten. Die Oberflächenzusammensetzung umfasst beispielsweise 0,05 bis 0,5 Gewichtsteile Methyltriacetoxysilan (MTAS), bevorzugt 0,1 bis 0,3 Gewichtsteile.

Bezogen auf den Festkörperanteil bedeutet dies, dass der Festkörperanteil der Oberflächenzusammensetzung zu 0,05 bis 0,9 Gew.-% aus MTAS besteht, vorzugsweise zu etwa 0,1 bis 0,5 Gew.-%, so wie z. B. zu etwa 0,4 Gew.-%.

Darüber hinaus kann die Oberflächenzusammensetzung weitere Oberflächenadditive umfassen. Geeignete Oberflächenadditive sind dem Fachmann bekannt. Die Additive werden in kleinen Mengen zugesetzt, so dass sie den Aufbau des Schichtenverbundes nicht wesentlich beeinträchtigen. Geeignete Oberflächenadditive sind z. B. solche, welche die Oberflächenspannung reduzieren (z. B. Polyetherdisilan bzw. polyethermodifizierte Polydimethylsiloxane, wie BYK-342 von BYK), d. h. oberflächenaktive Substanzen, mit deren Hilfe die Oberflächenspannung der Beschichtungsformulierung reguliert und gute Auftragseigenschaften bzw. Benetzungseigenschaften erreicht werden können.

Die Oberflächenzusammensetzung kann zum Beispiel 0 bis 20 Gewichtsteile an weiteren Oberflächenadditiven enthalten, vorzugsweise 0 bis 5 Gewichtsteile. Insbesondere kann die Oberflächenzusammensetzung 0 bis 20 Gewichtsteile Polydimethylsiloxan (z. B. in Form von BYK-342) enthalten, vorzugsweise 0 bis 5 Gewichtsteile. Mit anderen Worten können die Additive optimal in Mengen von 0 bis 10 Gew.-%, insbesondere 0 bis 5 Gew.-% in der Oberflächenzusammensetzung enthalten sein. So können z. B. gemäß US 2008/0145552 A1 Siloxan-Typen in Konzentrationen von 0,0001 bis 2 Gew.-% verwendet werden.

Weitere gebräuchliche Additive für Oberflächenzusammensetzungen sind UV- Absorber. Überraschenderweise ist es jedoch erfindungsgemäß nicht erforderlich, dass die Oberflächenzusammensetzung einen UV Absorber umfasst. Somit umfasst die Oberflächenzusammensetzung in einer Ausführungsform weniger als 0,1 Gew.-% UV-Absorber bezogen auf den Festkörperanteil, vorzugsweise keinen UV Absorber (oder UV Stabilisator). Auf diese Weise wird die Kratzfestigkeit der Oberflächenschicht nicht durch einen UV-Absorber beeinträchtigt.

Daneben kann die Oberflächenzusammensetzung ein oder mehrere organische Lösungsmittel enthalten. Geeignete organische Lösungsmittel sind an anderer Stelle hierin für die Primerzusammensetzung beschrieben. Diese Lösungsmittel können erfindungsgemäß ebenso für die Oberflächenzusammensetzung eingesetzt werden. Besonders bevorzugt umfasst die Oberflächenzusammensetzung n-Butanol, Isopropanol, n-Propanol, Isobutylalkohol, Isopropylglykol, Butylalkohol, Methoxypropanol, Methoxyethanol; Diacetonalkohol und/oder weitere in US 4,396,678 oder EP 0 035 272 beschriebene, gebräuchliche organische Lösungsmittel für Beschichtungsmittel und für Kratzfestlacke. Mit den Lösungsmitteln wird die Oberflächenzusammensetzung auf den gewünschten Festkörperanteil eingestellt. In einer Ausführungsform enthält die Oberflächenzusammensetzung Isopropanol. In einer weiteren, bevorzugten Ausführungsform enthält die Oberflächenzusammensetzung n-Butanol.

Wie oben beschrieben, bestimmt der Festkörperanteil der Oberflächenzusammensetzung in Abhängigkeit von dem Herstellungsverfahren, welches für die Herstellung des Schichtenverbundes verwendet wird, die Schichtdicke der Oberflächenschicht. Vorteilhafte Schichtdicken sind an anderer Stelle hierin beschrieben. Es wurde festgestellt, dass diese Schichtdicken bei einer Aufbringung der Oberflächenschicht durch das Flutverfahren bei einem Festkörperanteil der Oberflächenzusammensetzung von 15 % bis 30 % erreicht werden. Entsprechend weist die Oberflächenzusammensetzung vorzugsweise einen Festkörperanteil zwischen 15 und 30 %, stärker bevorzugt zwischen 18 und 22 %, am stärksten bevorzugt zwischen 19,5 und 20,5 % auf. Beispielsweise kann die Oberflächenzusammensetzung einen Festkörperanteil von etwa 20 % aufweisen. Der Fachmann ist in der Lage, je nach verwendetem Herstellungsverfahren für die Schichtenverbunde, diesen Festkörperanteil so anzupassen, dass eine geeignete Schichtdicke erzielt wird.

In einer bevorzugten Ausführungsform weist die Oberflächenzusammensetzung somit b1) 1 bis 80 Gewichtsteile kolloidales Siliciumdioxid (wie z. B. Ludox LS oder Levasil 200E/20), b2) 1 bis 80 Gewichtsteile MTMS und/oder MTES, b3) 0,05 bis 0,5 Gewichtsteile MTAS, b4) organisches Lösungsmittel (wie z. B. n-Butanol oder Isopropanol) und b5) optional 0 bis 20 Gewichtsteile Oberflächenadditive (wie Polydimethylsiloxan) auf. In einer noch stärker bevorzugten Ausführungsform weist die Oberflächenzusammensetzung b1) 40 bis 70 Gewichtsteile kolloidales Siliciumdioxid (wie z. B. Ludox LS oder Levasil 200E/20), b2) 40 bis 70 Gewichtsteile MTMS und/oder MTES, b3) 0,1 bis 0,3 Gewichtsteile MTAS, b4) organisches Lösungsmittel (wie z. B. n-Butanol oder Isopropanol) und b5) 0 bis 5 Gewichtsteile Oberflächenadditive (wie Polydimethylsiloxan) auf.

Die Oberflächenzusammensetzung ist vorzugsweise herstellbar, indem MTMS und/oder MTES und MTAS gemischt werden und unter Rühren das Siliciumdioxid hinzugegeben wird. Anschließend wird nach der Reaktion der Festkörperanteil mit Hilfe des Lösungsmittels eingestellt.

Darüber hinaus kann auch der pH Wert der Oberflächenzusammensetzung eingestellt werden. Es ist dabei bevorzugt, dass der pH Wert auf einen Wert von 6,5 bis 7,9, vorzugsweise auf einen Wert von 7 bis 7,4 eingestellt wird. In einer besonders bevorzugten Ausführungsform wird der pH Wert auf einen Wert von 7,2 eingestellt.

Es versteht sich, dass die genannten Bestandteile der Primerzusammensetzung und der Oberflächenzusammensetzung nach ihrem Zusammenmischen in der Primerzusammensetzung bzw. der Oberflächenzusammensetzung miteinander reagieren können und sollen. Die Primerzusammensetzungen und Oberflächenzusammensetzungen, die durch die Reaktion der zuvor definierten einzelnen Bestandteile entstanden sind, sind somit erfindungsgemäß mitumfasst.

In einem weiteren Aspekt betrifft die vorliegende Erfindung einen Schichtenverbund umfassend eine Kunststoffschicht, eine an die Kunststoffschicht angrenzende Primerschicht und eine an die Primerschicht angrenzende Oberflächenschicht, dadurch gekennzeichnet, dass die Primerschicht hergestellt ist aus einer hierin beschriebenen, erfindungsgemäßen Primerzusammensetzung. Mit anderen Worten enthält die Primerschicht neben den in dem Festkörper der Primerzusammensetzung enthaltenen Verbindungen möglicherweise auch Reaktionsprodukte, insbesondere Polyadditions-und/oder Polymerisationsprodukte, aus den im Festkörperanteil der Primerzusammensetzung enthaltenen Bestandteilen. Somit umfasst die Primerschicht insbesondere Polyalkylmethacrylate und Polysiloxan.

Die Primerschicht weist vorzugsweise Polyalkylmethacrylate mit einem Molekulargewicht von 100 000 Da bis 800 000 Da auf, besonders bevorzugt von 200 000 Da bis 500 000 Da. Es können z. B. von 50% bis 100% der in der Primerschicht enthaltenen Polyalkylmethacrylate ein Molekulargewicht innerhalb dieser Grenzen aufweisen, bevorzugt von 70% bis 100%.

Aufgrund ihrer vorteilhaften, geringen Rissbildungstendenz kann die Primerschicht eine besonders hohe Schichtdicke aufweisen. Es ist somit bevorzugt, dass die Primerschicht eine Dicke von 2 µm oder mehr, bevorzugt 3 µm oder mehr, stärker bevorzugt von 4 µm oder mehr aufweist. Die Primerschicht weist, anders gesagt, eine Dicke von 2,0 µm bis 12,0 µm , vorzugsweise von 3,0 µm bis 10 µm, wie z. B. etwa 6,5 µm, auf.

Die Oberflächenschicht ist bevorzugt aus einer hierin beschriebenen, erfindungsgemäßen Oberflächenzusammensetzung hergestellt. Mit anderen Worten enthält die Oberflächenschicht neben den in dem Festkörper der Oberflächenzusammensetzung enthaltenen Verbindungen möglicherweise auch Reaktionsprodukte aus den im Festkörperanteil der Oberflächenzusammensetzung enthaltenen Bestandteilen.

Die Oberflächenschicht kann z. B. eine Dicke von 2,3 µm oder mehr, bevorzugt 3,5 µm oder mehr, stärker bevorzugt 5 µm oder mehr aufweisen. Die Oberflächenschicht weist, anders gesagt, eine Dicke von 2,3 µm bis 8,0 µm, vorzugsweise von 3,0 µm bis 7,0 µm, wie z. B. etwa 5 µm, auf.

Die Kombination aus den erfindungsgemäßen Primer- und Oberflächenschichten ist besonders gut zur Erzeugung kratzfester, witterungsbeständiger Beschichtungen auf Kunststoffen geeignet. Die Kunststoffschicht kann insbesondere einen Kunststoff umfassen, der ausgewählt ist aus der Gruppe bestehend aus Polycarbonaten, Polystyrolen, Polyestem, beispielsweise Polyethylenterephtalat (PET), die auch glykolmodifiziert sein können, Polybutylenterephtalat (PBT), cycloolefinischen Copolymeren (COC), Acrylnitriden, Butatien, Styrol-Copolymeren, Poly(meth)acrylaten, wie Polymethylmethacrylat, Polyethylen, Polypropylen, Polyvinylchlorid und/oder Celluloseester. Bevorzugt ist die Kunststoffschicht eine Polycarbonatschicht oder eine Polymethyl(meth)acrylatschicht.

In einer besonders bevorzugten Ausführungsform ist die Kunststoffschicht eine Polycarbonatschicht. Polycarbonate sind in der Fachwelt bekannt. Polycarbonate können formal als Polyester aus Kohlensäure und aliphatischen oder aromatischen DihydroxyVerbindungen betrachtet werden. Sie sind leicht zugänglich durch Umsetzung von Diglykolen oder Biphenolen mit Phosgen bzw. Kohlensäurediestern in Polykondensation - bzw. Umesterungsreaktionen. Polycarbonate, die sich von Biphenolen ableiten, sind erfindungsgemäß bevorzugt. Zu diesen Biphenolen gehören insbesondere 2,2-Bis-(4-hydroxyphenyl)-propan (Bisphenol A), 2,2- Bis-(4-hydroxphenyl)-butan (Bisphenol B).

Üblicherweise werden derartige aromatische Polycarbonate durch Grenzflächenpolykondensation oder Umesterung hergestellt, wobei Einzelheiten in Encycl.Polym.Sci.Eingang.11, S. 648-718 dargestellt sind.

Bei der Grenzflächenpolykondensation werden die Biphenole als wässrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt.

Als Katalysator können z. B. Amine, bei sterisch gehinderten Biphenolen auch Phasentransferkatalysatoren, zum Einsatz kommen. Die resultierenden Polymere sind in den verwendeten organischen Lösungsmitteln löslich.

In einer weiteren bevorzugten Ausführungsform ist die Kunststoffschicht eine Poly(meth)acrylatschicht. Polymethacrylate werden im Allgemeinen durch radikalische Polymerisation von Mischungen erhalten, die (Meth)acrylate enthalten. Geeignete (Meth)acrylate sind dem Fachmann bekannt und können z. B. ausgewählt sein aus der Gruppe bestehend aus (Meth)acrylaten, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; und Methacylaten, die sich von ungesättigten Alkoholen ableiten, wie z. B. Oleyl(meth)acrylat, 2-Propinyl(meth)acrylat, Allyl(meth)acrylate, 2-Vinyl(meth)acrylate, Aryl(meth)acrylate, wie Benzyl(meth)acrylat. Weitere bevorzugte (monofunktionelle) Co-Monomere sind z. B. Butylacrylat, 2-Hydroxyethylacrylat, 2-Hydroxyethylmethacrylat, Hydroxypropylacrylat, tert.-Butylmethacrylat, und Isobornylmethacrylat.

Die erfindungsgemäßen Schichtenverbunde können aus lediglich den drei beschriebenen Schichten (Kunststoffschicht, Primerschicht und Oberflächenschicht) bestehen oder Teil eines mehrschichtigeren Verbundes sein. So kann der Schichtenverbund z. B. ferner eine Schicht aus einem thermoplastischen Polyurethan und/oder weitere Kunststoffschichten, wie z. B. Polycarbonatschichten und/oder PMMA Schichten umfassen. In bevorzugten Ausführungsformen umfasst der Schichtenverbund angrenzend an die Kunststoffschicht eine Schicht aus einem thermoplastischen Polyurethan und angrenzend an letztere Schicht eine weitere Kunststoffschicht. Letztere kann ebenfalls mit einer Primerschicht und einer darüber liegenden Oberflächenschicht beschichtet sein.

Die erfindungsgemäßen Schichtenverbunde sind außerordentlich UV-stabil. Aus diesem Grund betrifft die Erfindung in einem weiteren Aspekt die Verwendung eines erfindungsgemäßen Schichtenverbundes im Außenbereich. Es versteht sich, dass die Schichtenverbunde auch für den Innenbereich geeignet sind. "Außenbereich" umfasst in diesem Zusammenhang alle Bereiche, die einer regelmäßigen UV-Einstrahlung unterliegen. So betrifft die Erfindung z. B. die Verwendung eines erfindungsgemäßen Schichtenverbundes im Kraftfahrzeugbereich bzw. für Automobil-Verscheibungen, z. B. als Scheiben im Frontbereich von Kraftfahrzeugen.

In einem weiteren Aspekt betrifft die Erfindung die Verwendung eines erfindungsgemäßen Beschichtungssystems als Beschichtung von Kunststoffkörpern, insbesondere Kunststoffscheiben, z. B. thermoplastischen Kunststoffkörpern, wie thermoplastischen Kunststoffscheiben.

In einem weiteren Aspekt betrifft die Erfindung ein Verfahren zur Herstellung eines Schichtenverbundes, Schritte umfassend bei denen man (a) die Primerzusammensetzung eines erfindungsgemäßen Beschichtungssystems als Primerschicht auf eine Kunststoffschicht aufbringt und trocknet und (b) anschließend die Oberflächenzusammensetzung eines erfindungsgemäßen Beschichtungssystems als Oberflächenschicht auf die Primerschicht aufbringt und trocknet.

Verfahren zum Aufbringen der Primer-und der Oberflächenzusammensetzung als Primer-und Oberflächenschicht sind dem Fachmann bekannt. Insbesondere kann das Aufbringen der Schichten durch Fluten und anschließende Trocknung der Schicht erfolgen. Dabei erfolgt die Trocknung jeweils so lange, bis die jeweilige Schicht staubtrocken ist. Als Staubtrocken bezeichnet der Fachmann die getrocknete Beschichtung die beim Anfassen mit den Fingern keinen erkennbaren Abdruck hinterlässt.

Alternativ kann das Aufbringen der Zusammensetzungen aber auch durch andere Verfahren erfolgen, z. B. im Sprühverfahren oder im Tauchverfahren.

Das erfindungsgemäße Verfahren kann einen weiteren Schritt (c) umfassen, bei dem der Schichtenverbund nach Aufbringen der Primerschicht und der Oberflächenschicht auf eine Temperatur von 100 bis 160°C erhitzt wird, vorzugsweise bei 120 bis 140°C. Hierdurch werden die neu aufgetragenen Schichten eingebrannt. Das Erhitzen kann für eine Dauer von z. B. 30 min bis 4 h, vorzugsweise von 1 h bis 3 h erfolgen.

Schließlich betrifft die Erfindung auch einen Schichtenverbund, der mit dem erfindungsgemäßen Verfahren hergestellt wurde. Dieser Schichtenverbund weist die hierin beschriebenen vorteilhaften Eigenschaften auf.

### Beispiele

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

### Beispiel 1: Primerzusammensetzungen

Es wurden eine Reihe verschiedener Primerzusammensetzungen für die anschließende Testung in entsprechenden Schichtenverbunden hergestellt.
Beispiel A1 mit einem Festkörperanteil von 10 %
   1) 50 Gew.-% SHP 401 bezogen auf den Festkörperanteil
   2) 50 Gew.-% Polysiloxan bezogen auf den Festkörperanteil
   3) 1-Methoxy-2-propanol zum Einstellen des Festkörpers
   Die Lösung an SHP401 wurde vorgelegt. Anschließend wurde das Polysiloxan portionsweise unter Rühren hinzugegeben.
Beispiel A2 mit einem Festkörperanteil von 9 %
   1) 50 Gew.-% SHP 401 bezogen auf den Festkörperanteil
   2) 50 Gew.-% Polysiloxan bezogen auf den Festkörperanteil
   3) 1-Methoxy-2-propanol zum Einstellen des Festkörpers
   Die Lösung an SHP401 wurde vorgelegt. Anschließend wurde das Polysiloxan portionsweise unter Rühren hinzugegeben.
Beispiel A3 mit einem Festkörperanteil von 12 %
   1) 50 Gew.-% SHP 401 bezogen auf den Festkörperanteil
   2) 50 Gew.-% Polysiloxan bezogen auf den Festkörperanteil
   3) 1-Methoxy-2-propanol zum Einstellen des Festkörpers
   Die Lösung an SHP401 wurde vorgelegt. Anschließend wurde das Polysiloxan portionsweise unter Rühren hinzugegeben.
Beispiel A4 mit einem Festkörperanteil von 5 %
   1) 50 Gew.-% SHP 401 bezogen auf den Festkörperanteil
   2) 50 Gew.-% Polysiloxan bezogen auf den Festkörperanteil
   3) 1-Methoxy-2-propanol zum Einstellen des Festkörpers
   Die Lösung an SHP401 wurde vorgelegt. Anschließend wurde das Polysiloxan portionsweise unter Rühren hinzugegeben.
Beispiel A5 mit einem Festkörperanteil von 5 %
   1) 50 Gew. % Degalan M920 bezogen auf den Festkörperanteil
   2) 50 Gew.-% Polysiloxan bezogen auf den Festkörperanteil
   3) 26,6 Gew.-% Diacetylalkohol bezogen auf den Lösemittelanteil
   4) 51,6 Gew.-% 1-Methoxy-2-propanol bezogen auf den Lösemittelanteil
   Das Degalan M920 wurde portionsweise bei 80 °C zu den Lösungsmitteln Diacetylalkohol und 1-Methoxy-2-propanol gegeben und solange gerührt, bis sich eine klare Lösung gebildet hat. Anschließend wurde die Lösung abgekühlt und portionsweise das Polysiloxan zugegeben.
Beispiel A6 mit einem Festkörperanteil von 10 %
   1) 40 Gew. % Degalan M920 bezogen auf den Festkörperanteil
   2) 10 Gew. % 2,4-Dihydroxybenzophenon bezogen auf den Festkörperanteil
   3) 50 Gew.-% Polysiloxan bezogen auf den Festkörperanteil
   4) 26,6 Gew.-% Diacetylalkohol bezogen auf den Lösemittelanteil
   5) 51,6 Gew.-% 1-Methoxy-2-propanol bezogen auf den Lösemittelanteil
   Das Degalan M920 und der UV Absorber 2,4-Dihydroxybenzophenon wurden portionsweise bei 80 °C zu den Lösungsmitteln Diacetylalkohol und 1-Methoxy-2-propanol gegeben und solange gerührt, bis sich eine klare Lösung gebildet hat. Anschließend wurde die Lösung abgekühlt und portionsweise das Polysiloxan zugegeben. Alternativ könnte auch der UV-Absorber 2,4-Dihydroxybenzophenon gemeinsam portionsweise mit dem Polysiloxan im letzten Schritt hinzu gegeben werden.
Beispiel A7 mit einem Festkörperanteil von 2,5 %
   1) 62,5 Gew.-% SHP 401 bezogen auf den Festkörperanteil
   2) 37,5 Gew.-% Polysiloxan bezogen auf den Festkörperanteil
   3) 1-Methoxy-2-propanol zum Einstellen des Festkörpers
   Die Lösung an SHP401 wurde vorgelegt. Anschließend wurde das Polysiloxan portionsweise unter Rühren hinzugegeben.
Beispiel A8
   1) SHP401 der Firma Momentive
Beispiel A9
   1) KASI Primer aus dem Hause KRD

### Beispiel 2: Oberflächenzusammensetzungen

Es wurden eine Reihe verschiedener Oberflächenzusammensetzungen (Hardcoats) für die anschließende Testung in entsprechenden Schichtenverbunden hergestellt.
Beispiel B1
   1) 45,09 Gew.-% kolloidales Siliciumdioxid Ludox LS
   2) 54,69 Gew.-% Methyltrimethoxysilan (MTMS)
   3) 0,02 Gew.-% Polyetherdisilan BYK-342
   4) 0,20 Gew.-% Methyltriacetoxysilan (MTAS)
   5) n-Butanol zum Einstellen des Festkörpers
   Die Silane (MTMS und MTAS) wurden gemischt. Anschließend wurde unter Rühren das Siliciumdioxid langsam zugegeben und für 24 h bei Raumtemperatur gerührt. Zuletzt wurde die Lösung auf einen Festkörperanteil von ca. 21 % und der pH-Wert auf 7.2 eingestellt und das Verlaufsmittel hinzugefügt.
Beispiel B2
   1) 44,64 Gew.-% koloidales Siliciumdioxid Ludox LS
   2) 54,14 Gew.-% Methyltrimethoxysilan (MTMS)
   3) 0,02 Gew.-% Polyetherdisilan BYK-342
   4) 0,20 Gew.-% Methyltriacetoxysilan
   5) 1,00 Gew.-% 4,6-Dibenzoyl-2-(3-triethoxysilylpropyl)resorcinol
   6) n-Butanol zum Einstellen des Festkörpers
   Die Silane (MTMS und MTAS) wurden gemischt. Anschließend wurde unter Rühren das Siliciumdioxid langsam zugegeben und für 24 h bei Raumtemperatur gerührt. Schließlich wurde die Lösung auf einen Festkörperanteil von ca. 20 % und der pH-Wert auf 7.2 eingestellt und das Verlaufsmittel hinzugefügt. Dann wurde das 4,6-Dibenzoyl-2-(3-triethoxysilylpropyl)resorcinol zugegeben und für 24 h gerührt.
Beispiel B3
   1) 90 Gew.-% Polysiloxanlack mit UV-Schutz von KRD
   2) 10 Gew.-% nanoskaliges Siliciumcarbid Pulver
   Der Lack wurde mit dem Siliciumcarbid versetzt und für 2 h mit dem Dissolver behandelt. Die erhaltene Suspension wurde anschließend filtriert.
Beispiel B4
   1) AS4000 der Firma Momentive

### Beispiel 3: Herstellung Schichtenverbunde

Zunächst wurde die Primerschicht auf eine Polycarbonat-Kunststoffscheibe geflutet und so lange getrocknet, bis die Oberfläche staubtrocken war. Anschließend wurde die Oberflächenschicht auf die trockene Primerschicht geflutet und ebenfalls getrocknet, bis die Oberfläche staubtrocken war. Nachdem diese oberste Schicht getrocknet war, wurde das beschichtete Substrat bei 130°C für 2 h eingebrannt.

### Beispiel 4: Testung der Schichtenverbunde

Die hergestellten Schichtenverbunde (siehe Tabelle für die Kombinationen aus Primerschicht und Oberflächenschicht, die getestet wurden) wurden verschiedenen Tests unterzogen, die für die Erfüllung der ECE 43 R notwendig sind:
Wischertest: Hier wurde nach ECE 43 R der Wischertest durchgeführt. Es ist ein Testergebnis von ≤ 2 % Δ Haze zur Zulassung des Lacksystems vorgeschrieben.

Rissbildungstendenz: Ein Bauteil mit einer Lauflänge von 1500 mm wurde mit dem Primer und dem Hardcoat nacheinander beschichtet und anschließend wie oben beschrieben bei der jeweiligen Temperatur eingebrannt (125 bis 130 °C). Anschließend wurde das Bauteil abgekühlt und die Optik beurteilt.

Bewitterung: Die Bewitterungsstabilität wurde entsprechend der ECE 43 R getestet. Dabei wurde eine Strahlungsleistung von 0.68 W/m² bei 340 nm verwendet. Die ECE 43 Richtlinie schreibt eine Stabilität von 500 MJ/m² an Ultraviolettstrahlung (295 - 400 nm) vor. Kriterien zum Bestehen nach ECE 43 R sind die Bewertung der Optik und Haftung. In Bezug auf die Optik wurde auf Rissbildung, Delaminierung, Haftung und Vergilbung geprüft.

Darüber hinaus wurden die folgenden weiteren Tests an der Kombination der Primerschicht A1, A2, A3 und A6 und der Oberflächenschicht (Hardcoat) B1 durchgeführt:
Tabertest 500 Zyklen: ΔHaze < 2 %;
Waschstraßentest: 0,5 - 1,1 % ΔHaze;
Sandrieseltest: 1,7 - 3,4 % ΔHaze;
Kochtest (95 °C) Gt0 nach 2 h;
Bestehen der Prüfung Chemikalien unter Last;
Chemikalien Tauchprüfung;
erhöhte Luftfeuchtigkeit;
Temperaturwechseltest;
erhöhte Temperatur und
Lichtdurchlässigkeit nach ECE 43 R.

**Tabelle 1: Ergebnisse der kritischen Prüfungen für die Entwicklung eines Lackes mit sehr hoher Kratzfestigkeit und UV-Schutz.**

| Primerschicht | Oberflächenschicht (Hardcoat) | Schichtdicke Primer/ Top Coat [µm] | **Prüfung** | | |
|---|---|---|---|---|---|
| | | | Wischertest | Rissbildungstendenz nach Aushärten | Bewitterung |
| A1 | B1 | 2,3 / 2,5 | 0,1-2,0 % | keine Rissbildung | bestanden |
| A2 | B1 | 2,1 / 2,5 | 0,1-2,0 % | keine Rissbildung | bestanden |
| A3 | B1 | 5,3 / 4,4 | 0,1-2,0 % | keine Rissbildung | bestanden |
| A4 | B1 | 1,3 / 2,6 | 0,1-2,0 % | keine Rissbildung | nicht bestanden |
| A5 | B1 | 5,0 / 7,7 | 0,1-2,0 % | geringe Rissbildung | nicht bestanden |
| A6 | B1 | 3,2 / 5,1 | 0,1-2,0 % | keine Rissbildung | bestanden |
| A7 | B1 | 1,3 / 5,3 | 0,1-2,0 % | geringe Rissbildung | nicht bestanden |
| A8 | B1 | 0,9 / 6,5 | 0,1-2,0 % | hohe Rissbildung | nicht bestanden |
| A9 | B1 | 0,6 / 8,9 | 0,1-2,0 % | keine Rissbildung | nicht bestanden |
| A9 | B2 | 0,5 / 3,6 | 2,10% | geringe Rissbildung | bestanden |
| A8 | B3 | 0,8 / 6,0 | 17,00% | geringe Rissbildung | bestanden |
| A8 | B4 | 0,5 / 6,3 | 2,1 - 5,0 % | keine Rissbildung | bestanden |

Ergebnis: Durch die Kombination spezifischer Primerschichten und Oberflächenschichten (Hardcoats / Topcoats) wurde ein Schichtenverbund gefunden, der den derzeitigen Anforderungen der ECE 43 R genügt. Eine optimale Beschichtungsqualität konnte durch entsprechende Lösungsmittenkonzentrationen mit zusätzlichen Additiven in der Kombination A1/B1, A2/B1, A3/B1 und A6/B1 erreicht werden. Diese Kombinationen erzeugen eine Primerschichtdicke von mehr als 1,5 µm. Darüber hinaus umfasst ihre Primerzusammensetzung jeweils einen UV Absorber. Das erfindungsgemäße Lacksystem wird der ECE 43 R gerecht.

Obwohl die vorliegende Erfindung an Hand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Beschichtungssystem zur Herstellung eines hochkratzfesten Schichtenverbundes umfassend eine Primerzusammensetzung und eine Oberflächenzusammensetzung, **dadurch gekennzeichnet, dass** die Primerzusammensetzung
a1) Polyalkylmethacrylat,
a2) Polysiloxan, und
a3) organisches Lösungsmittel umfasst,
und dass
die Oberflächenzusammensetzung
b1) kolloidales Siliciumdioxid,
b2) Methyltrimethoxysilan und/oder Methyltriethoxysilan,
b3) Methyltriacetoxysilan, und
b4) organisches Lösungsmittel umfasst, vorzugsweise n-Butanol und/oder Isopropanol.

2. Schichtenverbund umfassend eine Kunststoffschicht, eine an die Kunststoffschicht angrenzende Primerschicht und eine an die Primerschicht angrenzende Oberflächenschicht, **dadurch gekennzeichnet, dass** die Primerschicht hergestellt ist aus einer Primerzusammensetzung, die
a1) Polyalkylmethacrylat,
a2) Polysiloxan und
a3) organisches Lösungsmittel umfasst,
und dass die Oberflächenschicht hergestellt ist aus einer Oberflächenzusammensetzung, die
b1) kolloidales Siliciumdioxyd,
b2) Methyltrimethoxysilan und/oder Methyltriethoxysilan,
b3) Methyltriacetoxysilan und
b4) organisches Lösungsmittel umfasst.

3. Schichtenverbund nach Anspruch 2, **dadurch gekennzeichnet, dass** die Kunststoffschicht eine Polycarbonatschicht oder eine Polymethyl(meth)acrylatschicht ist.

4. Schichtenverbund nach einem der Ansprüche 2 bis 3, **dadurch gekennzeichnet, dass** die Primerschicht eine Dicke von 2 µm oder mehr aufweist.

5. Schichtenverbund nach einem der Ansprüche 2 bis 3, **dadurch gekennzeichnet, dass** die Primerschicht UV-Absorber enthält.

6. Verwendung eines Schichtenverbundes nach einem der Ansprüche 2 bis 5, **dadurch gekennzeichnet, dass** der Schichtenverbund im Außenbereich eingesetzt wird.

7. Verwendung nach Anspruch 6, wobei der Schichtenverbund für Automobil-Verscheibungen eingesetzt wird.

8. Verfahren zur Herstellung eines Schichtenverbundes, Schritte umfassend bei denen man
(a) die Primerzusammensetzung eines Beschichtungssystems nach Anspruch 1 als Primerschicht auf eine Kunststoffschicht aufbringt und trocknet, und
(b) anschließend die Oberflächenzusammensetzung eines Beschichtungssystems nach Anspruch 1 als Oberflächenschicht auf die Primerschicht aufbringt und trocknet.

9. Schichtenverbund, **dadurch gekennzeichnet, dass** er mit dem Verfahren nach Anspruch 8 und/oder mit dem Beschichtungssystem nach Anspruch 1 hergestellt ist.

## Claims

1. Coating system for producing a highly scratch-resistant layered composite comprising a primer composition and a surface composition, **characterized in that** the primer composition comprises
a1) polyalkyl methacrylate,
a2) polysiloxane, and
a3) organic solvent,
and **in that**
the surface composition comprises
b1) colloidal silica,
b2) methyltrimethoxysilane and/or methyltriethoxysilane,
b3) methyltriacetoxysilane, and
b4) organic solvent, preferably n-butanol and/or isopropanol.

2. Layered composite comprising a plastics layer, a primer layer adjacent to the plastics layer, and a surface layer adjacent to the primer layer, **characterized in that** the primer layer is produced from a primer composition which comprises
a1) polyalkyl methacrylate,
a2) polysiloxane, and
a3) organic solvent,
and **in that** the surface layer is produced from a surface composition which comprises
b1) colloidal silica,
b2) methyltrimethoxysilane and/or methyltriethoxysilane,
b3) methyltriacetoxysilane, and
b4) organic solvent.

3. Layered composite according to claim 2, **characterized in that** the plastics layer is a polycarbonate layer or a polymethyl (meth)acrylate layer.

4. Layered composite according to either claim 2 or claim 3, **characterized in that** the primer layer has a thickness of 2 µm or more.

5. Layered composite according to either claim 2 or claim 3, **characterized in that** the primer layer contains UV absorbers.

6. Use of a layered composite according to any of claims 2 to 5, **characterized in that** the layered composite is used outdoors.

7. Use according to claim 6, wherein the composite layer is used for automotive glazing.

8. Method for producing a layered composite, comprising steps of
(a) applying the primer composition of a coating system according to claim 1 to a plastics layer as a primer layer and drying said primer composition, and
(b) then applying the surface composition of a coating system according to claim 1 to the primer layer as a surface layer and drying said surface composition.

9. Layered composite, **characterized in that** it is produced using the method according to claim 8 and/or using the coating system according to claim 1.

## Revendications

1. Système de revêtement pour fabriquer un composite de couche hautement résistant aux rayures comprenant une composition d'apprêt et une composition de surface, **caractérisé en ce que**
la composition d'apprêt comprend
a1) du polyméthacrylate d'alkyle,
a2) du polysiloxane, et
a3) un solvant organique,
et **en ce que**
la composition de la surface comprend
b1) du dioxyde de silice colloïdal,
b2) du méthyltriméthoxysilane et/ou du méthyltriéthoxysilane,
b3) du méthyltriacétoxysilane, et
b4) un solvant organique, de préférence le n-butanol et/ou l'isopropanol.

2. Composite de couche comprenant une couche de plastique, une couche d'apprêt adjacente à la couche de plastique et une couche de surface adjacente à la couche d'apprêt, **caractérisé en ce que** la couche d'apprêt est constituée d'une composition d'apprêt qui comprend
a1) du polyméthacrylate d'alkyle,
a2) du polysiloxane et
a3) un solvant organique,
et **en ce que** la couche de surface est constituée d'une composition de surface qui comprend
b1) du dioxyde de silice colloïdal,
b2) du méthyltriméthoxysilane et/ou du méthyltriéthoxysilane,
b3) du méthyltriacétoxysilane et
b4) un solvant organique.

3. Composite de couche selon la revendication 2, **caractérisé en ce que** la couche de plastique est une couche de polycarbonate ou une couche de polyméthyl(méth)acrylate.

4. Composite de couche selon l'une quelconque des revendications 2 à 3, **caractérisé en ce que** la couche d'apprêt présente une épaisseur de 2 µm ou plus.

5. Composite de couche selon l'une quelconque des revendications 2 à 3, **caractérisé en ce que** la couche d'apprêt contient des absorbeurs d'UV.

6. Utilisation d'un composite de couche selon l'une quelconque des revendications 2 à 5, **caractérisée en ce que** le composite de couche est utilisé à l'extérieur.

7. Utilisation selon la revendication 6, dans laquelle le composite de couche est utilisé pour le vitrage automobile.

8. Procédé de fabrication d'un composite de couche, comprenant les étapes dans lesquelles
(a) on applique et on sèche la composition d'apprêt d'un système de revêtement selon la revendication 1 en tant que couche d'apprêt sur une couche de plastique, et
(b) on applique et on sèche ensuite la composition de surface d'un système de revêtement selon la revendication 1 en tant que couche de surface sur la couche d'apprêt.

9. Composite de couche, **caractérisé en ce qu'**il est réalisé avec le procédé selon la revendication 8 et/ou avec le système de revêtement selon la revendication 1.
